# EUROPEAN PATENT APPLICATION

(11) **EP 4 787 175 A1**
(43) Date of publication of application: **05.08.2026**
(21) Application number: 26152163.7
(22) Date of filing: 15.01.2026
(51) Int. Cl.: G06F 13/38, G06F 13/40, G06F 13/42, H04L 65/752, H04L 69/22, H04L 69/28, H04L 25/24, H04L 12/64, H04L 12/40, G06F 13/22, H04L 43/0852, H04W 56/00

(54) **REPEATER DETERMINISTIC PROPAGATION DELAY**

(30) Priority: 31.01.2025 US 202519042926
(71) Applicant: NXP USA, Inc., Austin, TX 78735 (US)
(72) Inventor: Mari, Ugo, 5656 AG Eindhoven (NL); Daniel, Steven, 5656 AG Eindhoven (NL)
(74) Representative: Schmütz, Christian Klaus Johannes

(57) **Abstract**

Embodiments of a repeater (402), an embedded Universal Serial Bus (eUSB) repeater (402), and a method of operating a repeater (402) are disclosed. In an embodiment, a repeater (402) includes a timer (436) configured to generate a counter value that represents a time distance between a frame slot and a packet start and a modem (418) configured to transmit output data containing the counter value over a repeater channel (420).

## Description

### BACKGROUND

In some architectures, communication devices are designed to repeat traffic between upstream facing ports and downstream facing ports, in either direction, by passing a communication stream through an intermediate data link. Such devices may be referred to as "Hybrid Repeaters" borrowing from embedded Universal Serial Bus 2 (eUSB2) terminology.

### SUMMARY

Embodiments of a repeater, an embedded Universal Serial Bus (eUSB) repeater, and a method of operating a repeater are disclosed. In an embodiment, a repeater includes a timer configured to generate a counter value that represents a time distance between a frame slot and a packet start and a modem configured to transmit output data containing the counter value over a repeater channel. Other embodiments are also disclosed.

In an embodiment, a time calculated from the counter value is elapsed at a receiver to achieve a deterministic and fixed propagation delay before starting data retransmission.

In an embodiment, the timer is further configured to measure a time duration from when the packet start is detected to when the frame slot is transmitted on the repeater channel.

In an embodiment, the repeater further includes a packet management unit configured to start a counter of the timer when a start-of-packet is detected, and the counter value of the counter represents the time distance between the frame slot of the repeater channel and the packet start.

In an embodiment, the timer is further configured to recycle the counter each time a slot start signal is received.

In an embodiment, the timer is further configured to freeze the counter value when the packet start is detected by the packet management unit.

In an embodiment, the packet management unit is further configured to trigger a start of packet (SoP) unit when the packet start is detected.

In an embodiment, the SoP unit is configured to generate an SOP extended symbol that includes an SOP identification (ID) and the counter value.

In an embodiment, the repeater further includes a physical layer configured to receive input data from a data source with a latency requirement, and the counter value represents the time distance between the frame slot of the repeater channel and the packet start of the input data.

In an embodiment, the repeater includes an embedded Universal Serial Bus (eUSB) repeater.

In an embodiment, an eUSB repeater includes a timer configured to generate a counter value that represents a time distance between a frame slot and a packet start, a framer configured to generate frames based on the counter value, and a modem configured to transmit the frames over a repeater channel.

In an embodiment, the eUSB repeater further includes a packet management unit configured to start a counter of the timer when a start-of-packet is detected, and where the counter value of the counter represents the time distance between the frame slot of the repeater channel and the packet start.

In an embodiment, the timer is further configured to recycle the counter each time a slot start signal is received.

In an embodiment, the timer is further configured to freeze the counter value when the packet start is detected by the packet management unit.

In an embodiment, the packet management unit is further configured to trigger a start of packet (SoP) unit when the packet start is detected.

In an embodiment, the SoP unit is configured to generate an SOP extended symbol that includes an SOP identification (ID) and the counter value.

In an embodiment, the eUSB repeater further includes a physical layer configured to receive input data from a data source with a latency requirement.

In an embodiment, a method of operating a repeater involves generating a counter value that represents a time distance between a frame slot and a packet start and transmitting output data containing the counter value over a repeater channel.

In an embodiment, the method further includes generating frames based on the counter value, where transmitting the output data containing the counter value over the repeater channel includes transmitting the frames over the repeater channel.

In an embodiment, the method further includes starting a counter when a start-of-packet is detected, and where the counter value of the counter represents the time distance between the frame slot of the repeater channel and the packet start.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 depicts an example of a hybrid repeater re-timer system in accordance with an embodiment of the invention.
Figs. 2A1-2B2 show some USB Full-Speed timing examples.
Figs. 3A1-3D2 show some USB Full-Speed timing examples with the same propagation delays.
Fig. 4 depicts an example of a hybrid repeater re-timer system.
Fig. 5 is a process flow diagram of a method of operating a repeater in accordance with an embodiment of the invention.
Fig. 6 depicts an example of a repeater in accordance with an embodiment of the invention.
Fig. 7 depicts an example of a repeater system in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

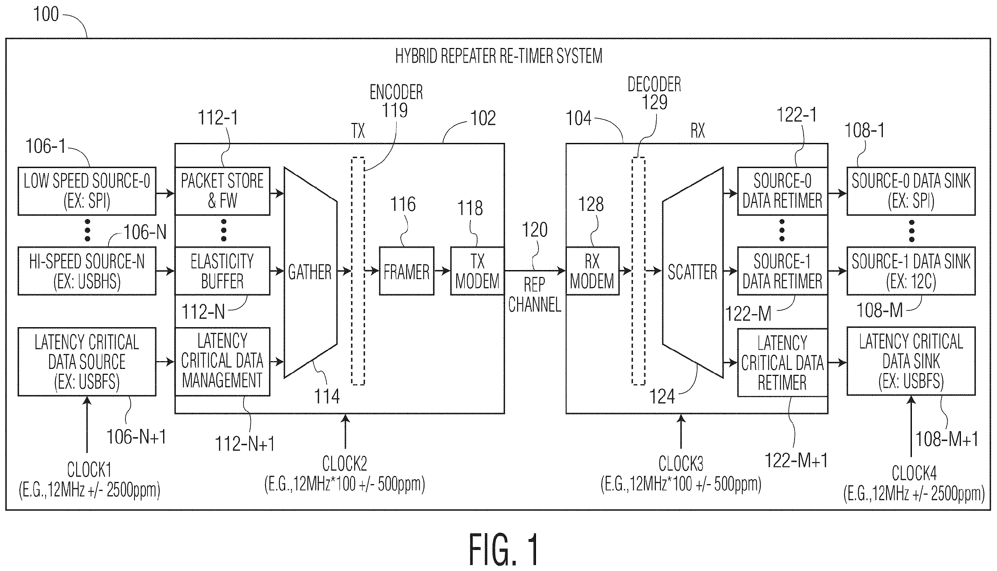

Fig. 1 depicts a hybrid repeater re-timer system 100 in accordance with an embodiment of the invention. In the embodiment depicted in Fig. 1, the hybrid repeater re-timer system 100 has a repeater channel 120 shared across multiple data sources and sinks. In the embodiment depicted in Fig. 1, the hybrid repeater re-timer system 100 includes a transmitter (TX) 102, a receiver (RX) 104, one or more data sources 106-1, ..., 106-N+1, where N is a positive integer, and one or more data sinks 108-1, ..., 108-M+1, where M is a positive integer. The hybrid repeater re-timer system 100 can be used in various applications, such as consumer or enterprise applications, medical applications, computer applications, and/or industrial applications. In the embodiment depicted in Fig. 1, the data sources 106-1, ..., 106-N+1 include a low-speed data source (e.g., Serial Peripheral Interface (SPI)) 106-1, a high-speed data source (e.g., USB High Speed (USBHS)) 106-N, and a latency critical data source (e.g., USB Full Speed (USBFS)) 106-N+1, while the data sinks 108-1, ..., 108-M+1 include a low-speed data source (e.g., SPI) 108-1, a high-speed data source (e.g., I2C) 108-M, and a latency critical data sink (e.g., USBFS) 108-M+1. In some embodiments, the hybrid repeater re-timer system 100 is a wired communications system, e.g., the repeater channel 120 is a wired channel. In some embodiments, the hybrid repeater re-timer system 100 is a wireless communications system, e.g., the repeater channel 120 is a wireless channel. The hybrid repeater re-timer system 100 may be fully or partially implemented as at least one integrated circuit (IC) device. In some embodiments, the transmitter (TX) 102 and the receiver (RX) 104 are located in separate substrates and are implemented as separate IC devices. Although the depicted hybrid repeater re-timer system 100 is shown in Fig. 1 with certain components and described with certain functionality herein, other embodiments of the hybrid repeater re-timer system 100 may include fewer or more components to implement the same, less, or more functionality. In addition, although the hybrid repeater re-timer system 100 is shown in Fig. 1 as being connected in a certain topology, the network topology of the hybrid repeater re-timer system 100 is not limited to the topology shown in Fig. 1. The hybrid repeater re-timer system 100 can be used in wireless and wired applications.

In the embodiment depicted in Fig. 1, the hybrid repeater re-timer system 100 can be used for aggregating multiple wired links to one shared connection which is the repeater channel, or for changing input transmission medium from passive wire to active logic, optical, wireless, or other connection, or for both of these and other reasons. In some embodiments, the hybrid repeater re-timer system 100 is compatible with an eUSB protocol, which deals with a wide range of signaling conditions.

Serial streams repeated through hybrid repeater devices must maintain their timing specification requirements. Some protocols, such as the USB2 protocol, specify a maximum propagation delay variation allowed through the repeater and also establish maximum jitter budget between special bus synchronization signaling (SOFs), which are periodically sent through the network. For example, packet propagation delay variation is not accepted by some communication protocols, such as USB2, which imposes maximum propagation delay variation parameter (see USB2 section 7.1.14.2: USB2 maximum Hub delay Variation Range Thshdv), which is to guarantee stable/predictable response of the system where a repeater device operates. Another reason why propagation delay variation may be not accepted is to preserve stable/deterministic propagation of broadcasted timing reference signals through the communication network, such as the USB2 Start of Frame (SOF) signal used to share common time-base with isochronous communication devices for audio/video streaming application (see USB2 section 7.1.12: Max Consecutive Microframe Interval Difference Thsrfi=4hs bit times and Max Consecutive Frame Interval Jitter=42ns). Even when it is not enforced by a standard timing specification for a specific protocol, there could be system-level or application-level latency constraints requiring to feature deterministic propagation delay for a specific stream passing through the hybrid repeater.

For example, communications between devices exchanging multiple data streams from different data sources over the repeater channel 120 is normally based on frame exchanges. To transport low-bit-rate data sources (e.g., the low-speed data source-0 106-1 in Fig. 1) predefined time-division slots filled with destination IDs and correspondent data can be dynamically allocated by the frame scheduler as per current traffic needs. In case of medium-bandwidth and/or latency sensitive traffic protocols to be transported (e.g., the latency critical data source 106-N+1 in Fig. 1), a slot can be stably allocated on the frame for guaranteed bandwidth delivery and latency optimization reasons. If the slot is pre-allocated on all frames, data is immediately ready to jump on the next slot as soon as it arrives, otherwise additional time would be lost for asking the framer 116 to create the slot in the next frame and then wait for frame arrival. This is the reason why pre-allocated slots are used in a reference frame structure to transport the latency critical USB Full-Speed data. Because of the shared nature of the channel, and to preserve bandwidth performance of the channel, it is not generally possible to synchronize the frame transmission timing to the need of one particular data source. In the general context of asynchronous, periodic, and continuous frames running on the channel, the propagation delay through the channel normally depends on the time distance between the leading edge of the input packet at the receiver end to when the correspondent slot is started on the channel in the same direction, which is normally unpredictable.

In the embodiment depicted in Fig. 1, the hybrid repeater re-timer system 100 overcomes the natural unpredictability of the propagation delay through a hybrid repeater channel 120, allowing meeting timing specification requirements of latency critical (e.g., USB2) and latency sensitive traffic profiles, and of any other system level requirement ,which may apply a fixed latency constraint on the channel. Specifically, the hybrid repeater re-timer system 100 can provide a deterministic propagation delay, support latency critical and latency sensitive traffic profiles (e.g., USB2 Full-Speed repeaters), and enable the transport of precise timing reference signaling (e.g., USB SOFs) with a strict jitter requirement. In addition, the hybrid repeater re-timer system 100 does not imply a maximum latency penalty.

In the embodiment depicted in Fig. 1, the hybrid repeater re-timer system 100 has a deterministic packet propagation delay. The hybrid repeater re-timer system 100 (e.g., the transmitter (TX) 102 or the receiver (RX) 104) monitors time distance from the starting point of the latency-sensitive slot in a frame until a packet start is detected at the repeater input, and sends the measured time distance in the frame. The hybrid repeater re-timer system 100 has a periodic frame structure and dedicated symbol encoding, which transports the measured distance in the next slot at a predictable time. The hybrid repeater re-timer system 100 (e.g., the transmitter (TX) 102 or the receiver (RX) 104) decodes the special symbol received from the frame, counts the indicated amount of time, and starts transmitting the leading packet symbol on the paired device's wired output. In this embodiment, the input clock Clock2=(12MHz*100)+/-500ppm of the TX 102 and the input clock Clock3=(12MHz*100)+/-500ppm of the RX 104 are chosen with a multiplication factor of 100 with respect to the USB Full-Speed data rate (e.g., the clock Clock2=12MHz+/-2500ppm of the TX 102 and the clock Clock3=12MHz+/-2500ppm of the RX 104 are chosen). Lower multiplication factors may be used. In this embodiment, Clock2 and Clock3 run at higher speed with respect to the USB Full-Speed data rate allowing the repeater to perform all the necessary steps within one bit period, and are also an integer multiple of the data rate to be in line with the USB frequency requirement. Moreover, Clock2 and Clock3 frequency must be high enough to measure and apply the clock adjustment factor with a precision compatible with the max jitter requirement. The indicated +/-500ppm clock frequency tolerance is chosen in case the repeater system 100 can also support the USB High-Speed data rates. Otherwise, if limited to Full-Speed requirement, Clock2 and Clock3 clock frequency precision can be relaxed to +/-2500 ppm.

In the embodiment depicted in Fig. 1, the transmitter (TX) 102 includes one or more storage units 112-1, ..., 112-N+1 that, for example, include a packet store and forward (FW) module 112-1, an elasticity buffer 112-N, a latency critical data management module 112-N+1, an optional encoder 119, a gather 114, a framer 116, and a TX modem 118. In some embodiments, at least one of the packet store and forward (FW) module 112-1, the elasticity buffer 112-N, the latency critical data management module 112-N+1, the encoder 119, the gather 114, the framer 116, and the TX modem 118 is implemented in analog, digital, and/or firmware circuity. In some embodiments, the encoder 119 is located between the storage units 112-1, ..., 112-N+1 and the gather 114 or between the framer 116 and the TX modem. In an example operation, the packet store and forward (FW) module 112-1, the elasticity buffer 112-N, the latency critical data management module 112-N+1 receive data from the low-speed data source 106-1, the high-speed data source 106-N, and the latency critical data source 106-N+1, respectively, and send the received data to the gather 114 that aggregates the received data. The encoder 119 encodes the aggregated data to generate encoded data, which is processed by the framer 116, and modulated and outputted by the TX modem 118. In some embodiments, the gather 114 is implemented using a multiplexer or a sum unit.

In some embodiments, the encoder 119 is configured to generate symbols based on data from the data sources 106-1, ..., 106-N+1, and the TX modem 118 is configured to transmit information in the symbols over a repeater channel 120. In some embodiments, the data sources include the latency critical data source 106-N+1. In some embodiments, the data sources 106-1, ..., 106-N+1 include a first data source 106-1 with a first data speed and a second data source 106-N with a second data speed, and the first data speed is different from (e.g., lower than) the second data speed. In some embodiments, the framer 116 is configured to generate frames based on the symbols, where the TX modem 118 is configured to transmit the frames over the repeater channel 120. In some embodiments, the transmitter (TX) 102 is a component of an embedded Universal Serial Bus (eUSB) repeater. In some embodiments, the symbols have a size of four bits or twelve bits. In some embodiments, the symbols include a burst symbol that is composed of four-bit symbols. In some embodiments, the symbols include a clock adjustment symbol or a bus state symbol. In some embodiments, the symbols include a non-repeating (NREP) symbol, a start of packet (SOP) symbol, an extra data (XDAT) symbol, or a non-action (NOP) symbol.

In the embodiment depicted in Fig. 1, the receiver (RX) 104 includes one or more retimer units 122-1, ..., 122-M+1 that can fully recover data, extract an embedded clock and retransmit a fresh copy of the data using a clean clock and for example, include a data retimer 122-1, a data retimer 122-M, a latency critical data retimer 122-M+1, a scatter 124, an optional decoder 129, and a RX modem 128. In some embodiments, at least one of the data retimer 122-1, the data retimer 122-M, the latency critical data retimer 122-M+1, the scatter 124, the decoder 129, and the RX modem 128 is implemented in analog, digital, and/or firmware circuity. In some embodiments, the decoder 129 is located between the RX modem 128 and the scatter 124. In an example operation, data received through the repeater channel 120 is demodulated by the RX modem 128, separated by the scatter 124, and decoded by the decoder 129, and the decoded data from the decoder 129 are processed by the data retimer 122-1, the data retimer 122-M, and the latency critical data retimer 122-M+1, and stored in the low-speed data source (e.g., SPI) 108-1, the high-speed data source (e.g., I2C) 108-M, and the latency critical data sink (e.g., USBFS) 108-M+1, respectively. In some embodiments, the scatter 124 is implemented using a demultiplexer.

In accordance with an embodiment of the invention, the transmitter (TX) 102 generates a counter value that represents the time distance from when the data transmission is started by the latency sensitive data source 106 and received at the latency critical data management module 112-N+1 to when the received data is transmitted on the repeater channel 120, and transmits such counter value over the repeater channel 120, with or without the received data, encoded into a SOP symbol on the channel frame. In some embodiments, the generated counter value represents the time distance between the nominal position where the source data would be transmitted on the repeater channel 120 to when the start of data reception is effectively detected by the latency critical data management module 112-N+1. In some embodiments, a time calculated from the counter value is elapsed at the RX 104 to achieve a deterministic and fixed propagation delay before starting data retransmission, e.g., from the latency critical data sink 108-M+1. In some embodiments, the framer 116 is configured to aggregate the channel frames, which contain the SOP symbol along with other data from the other sources 112-1 ...112-N, where the transmitter modem 118 is configured to transmit the frames over the repeater channel. In some embodiments, the channel frames are received by the RX modem 128. In some embodiments, the SOP symbol is extracted from the received channel's frames by the decoder 129. In some embodiments, the extracted SOP symbol is delivered to the latency critical data retimer 122-M+1 by the scatter 124. In some embodiments, the latency critical data retimer 122-M+1 decodes the SOP symbol and extracts the source data information and the counter value representing the latency between source data reception at the latency critical data management module 112-N+1 and the source data transmission on the repeater channel 120 at the TX modem 118. In some embodiments, the latency critical data retimer 122-M+1 uses the input latency information in the SOP symbol to calculate a waiting time before starting the source data retransmission. In some embodiments, the latency critical data retimer 122-M+1 calculates the waiting time to start data retransmission after having received the SOP symbol to have a constant end-to-end propagation delay between the source data reception at the latency critical data management module 112-N+1 and the source data retransmission at the latency critical data retimer 122-M+1. In some embodiments, the transmitter (TX) 102 starts a counter of the timer when a start-of-packet is detected, and the counter value of the counter represents the time distance between the frame slot of the repeater channel and the packet start. In some embodiments, the transmitter (TX) 102 recycles the counter each time a slot start signal is received. In some embodiments, the transmitter (TX) 102 freezes the counter value when the packet start is detected. In some embodiments, the transmitter (TX) 102 triggers a start of packet (SoP) unit when the packet start is detected. In some embodiments, the transmitter (TX) 102 generates an SOP extended symbol that includes an SOP identification (ID) and the counter value. In some embodiments, the transmitter (TX) 102 receives input data from a data source with a latency requirement. In some embodiments, the counter value represents the time distance between the frame slot of the repeater channel and the packet start of the input data. In some embodiments, the transmitter (TX) 102 is included in an embedded Universal Serial Bus (eUSB) repeater.

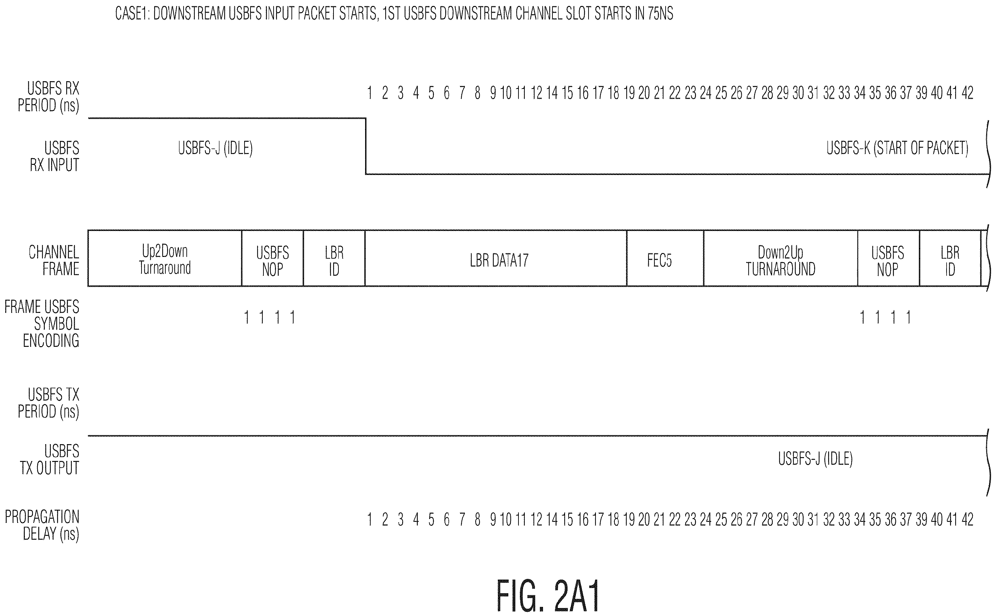

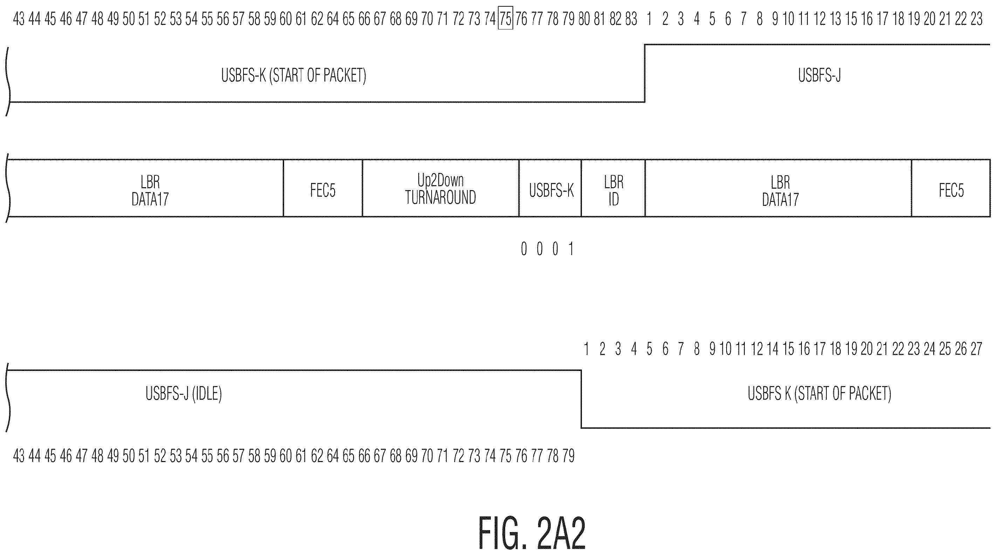

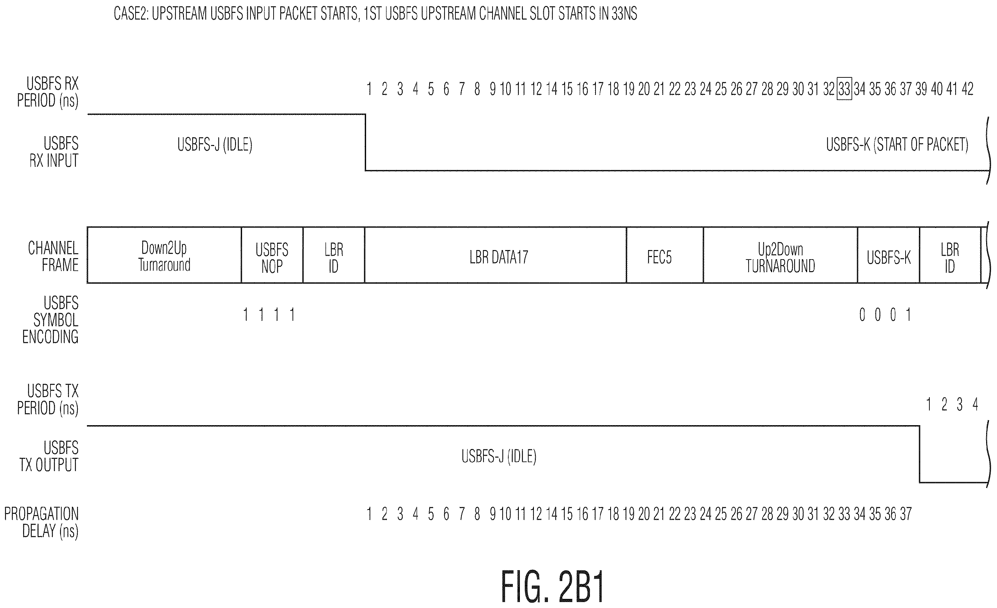

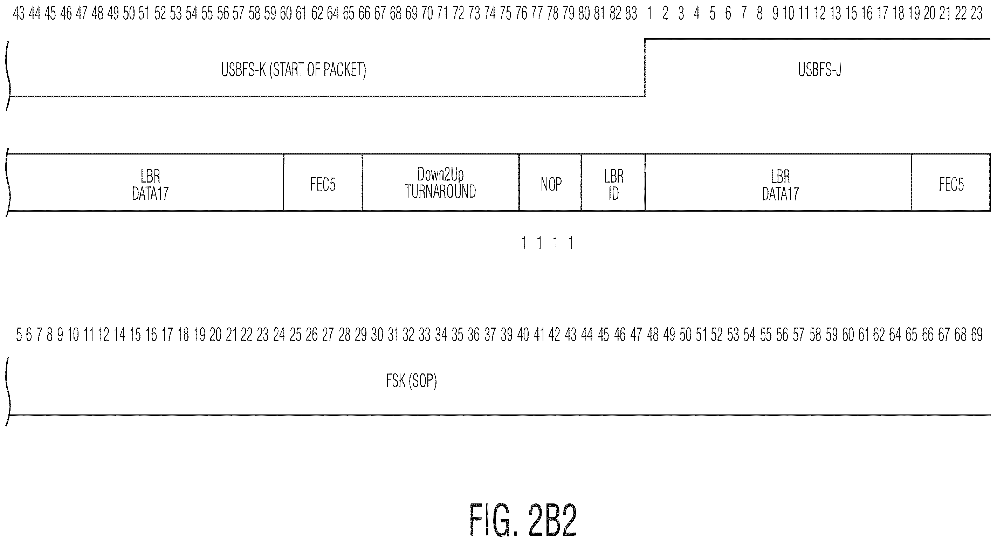

Figs. 2A1-2B2 show some USB Full-Speed timing examples, which have different time relationship between USBFS input packet start and Channel USBFS Slot Start and also show that, without the SOP mechanism described above being in place, the two different time relationships would naturally result in two different propagation delays measured at the repeater's ends. In these examples, the USBFS symbol "no-data" is encoded on the channel's frame as a 4-bit symbol "1111", the USBFS symbol "K," which signals the start of a data packet is encoded as a 4-bit symbol "0001", the input USBFS RX INPUT and the output USBFS TX terminations of the repeater are also shown, the SOP counter USBFS RX PERIOD, which measures the time between the leading data edge and the USBFS symbol transmission in the frame, is also shown, and the Propagation delay of the leading data edge through the repeater is also shown. Figs. 2A1-2A2 refer to the case when a half-duplex repeater channel is transmitting in the opposite direction with respect to the incoming USBFS traffic at the time the first data is received and show that a delay of 75 nanosecond (ns) between the start of the leading USBFS-K data reception to the start of the USBFS-K data transmission over channel's frame, due to the need of first waiting the end of the current frame in the opposite channel direction, then waiting for the channel turnaround time, then waiting for USBFS data slot allocation in the same channel direction, would ideally result in a propagation delay of approximately 79ns. Figs. 2B1-2B2 refer to the case when a half-duplex repeater channel is transmitting in the same direction with respect to the incoming USBFS traffic at the time the first data is received and show that a delay of 33ns between the start of the leading USBFS-K data reception to the start of the USBFS-K data transmission over channel's frame, due to the need of first waiting for USBFS data slot allocation in the same channel direction, would ideally result in a propagation delay of approximately 37ns.

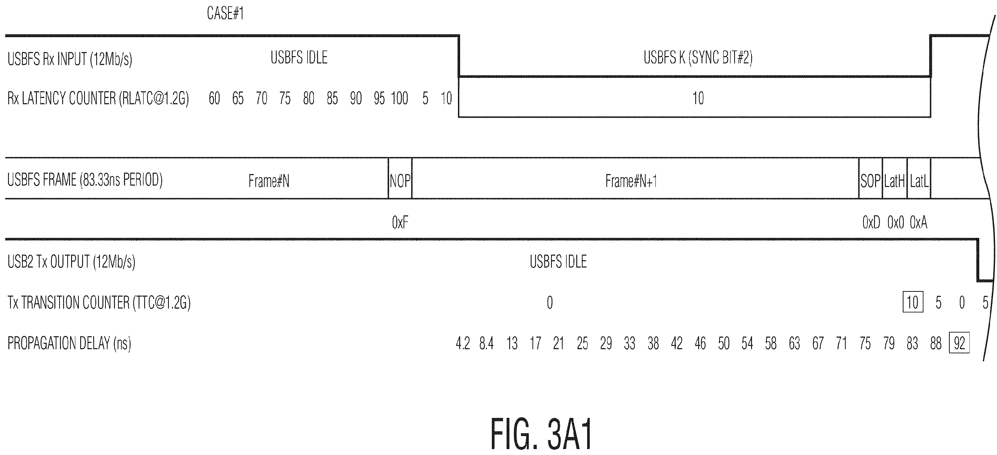

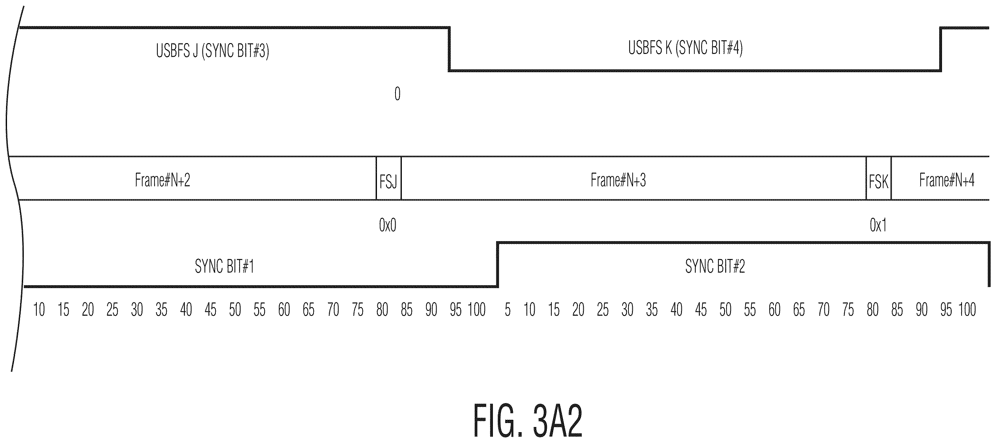

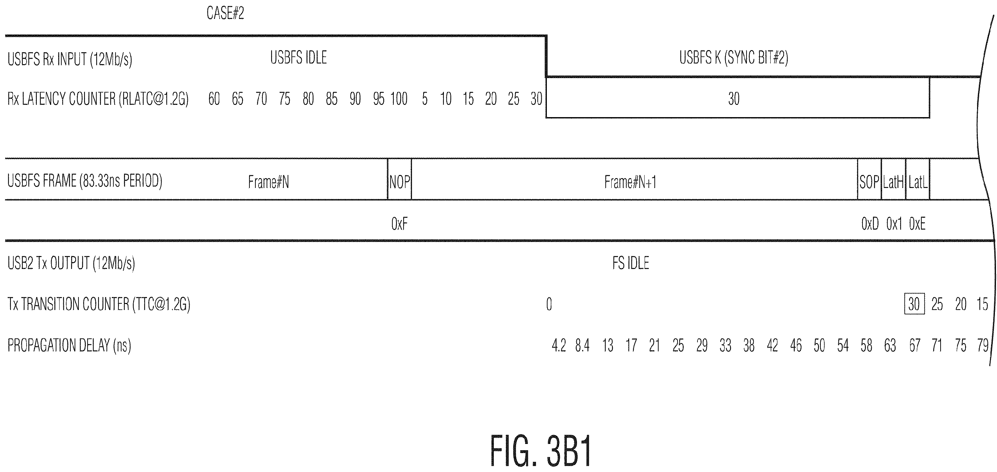

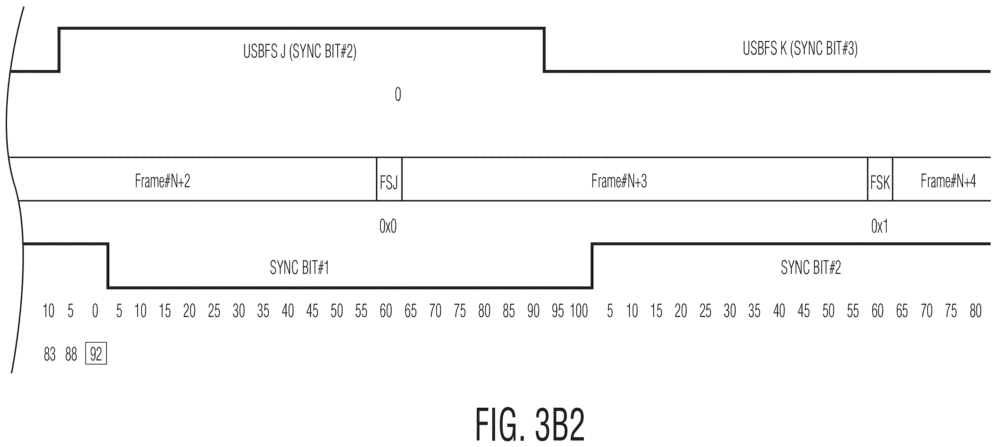

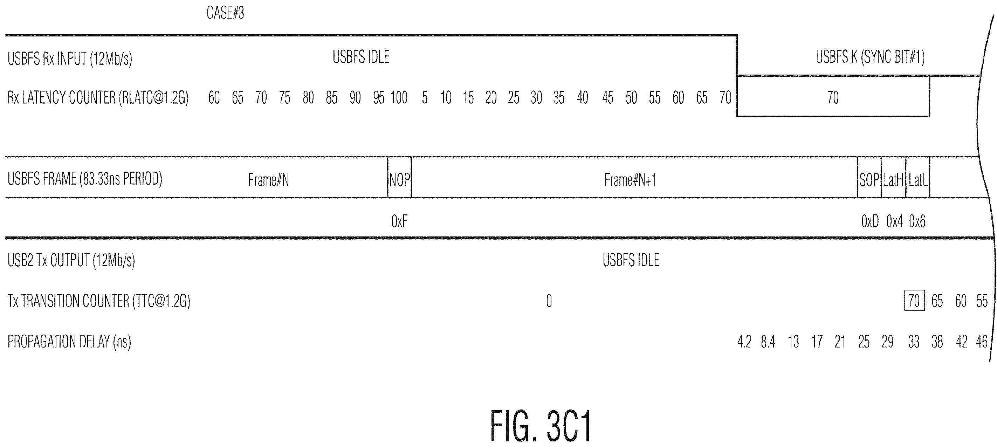

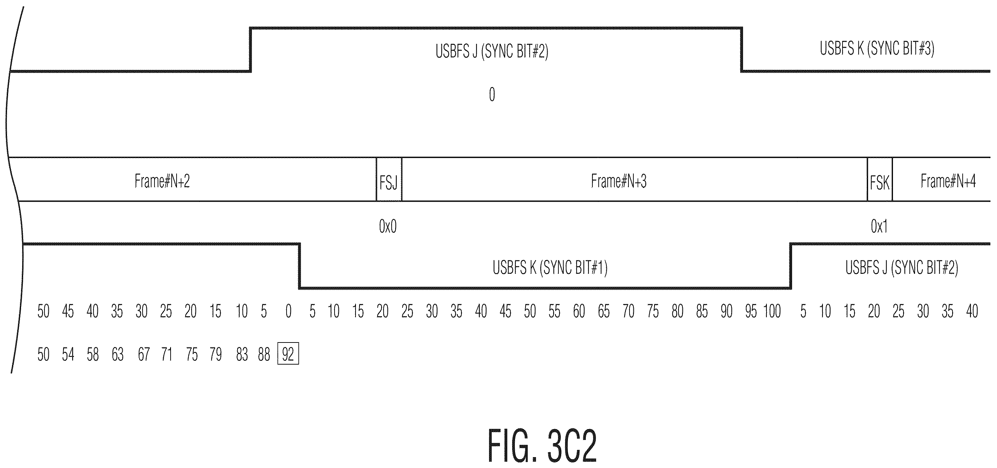

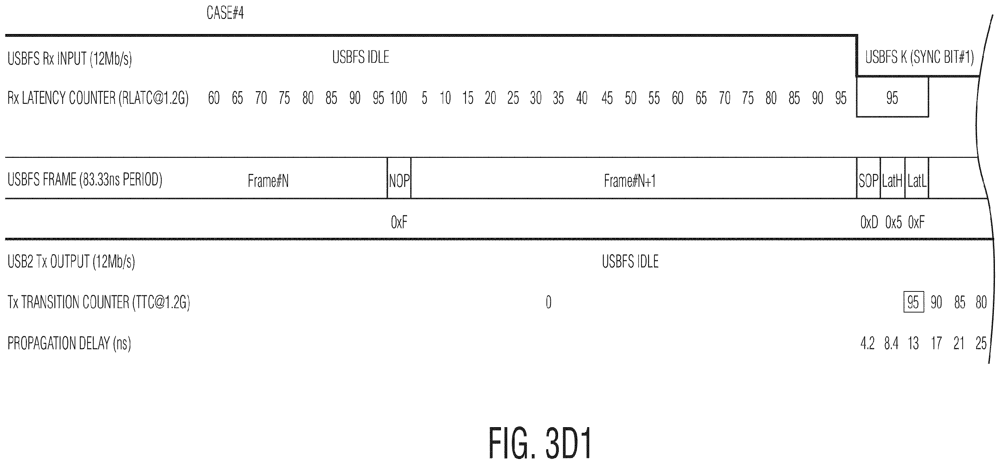

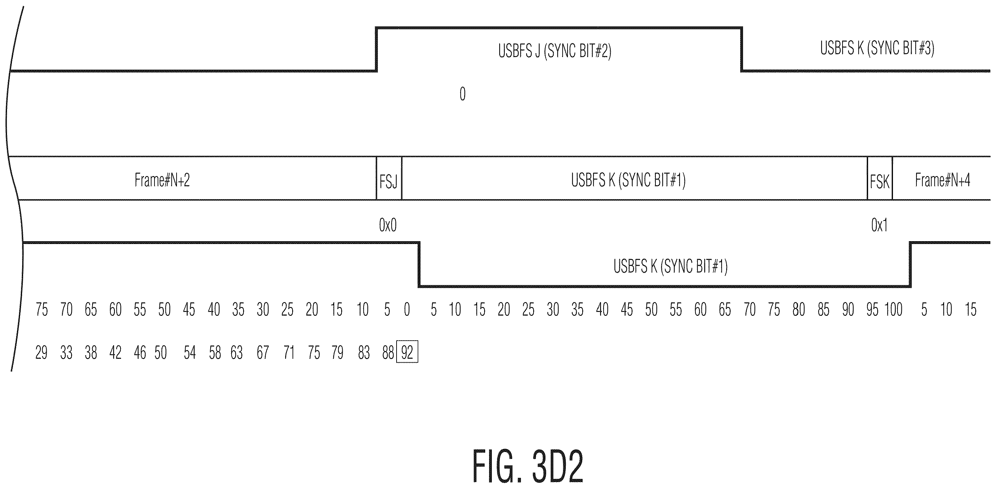

Figs. 3A1-3D2 show some USB Full-Speed timing examples with the same propagation delays. As shown in Figs. 3A1-3D2, each of the USB Full-Speed timing examples includes USBFS RX input, RX Latency counter, USBFS Frame, USB2 TX Output, TX transition counter, and propagation delay. Figs. 3A1-3D2 show four USB Full-Speed timing examples, which have different time relationship between USBFS input packet start and Channel USBFS Slot Start and also show that, thanks to the SOP mechanism described above in place, the four different time relationships result in the same propagation delay being measured at the repeater's ends. In these examples, the USBFS symbol "no-data" is encoded on the channel's frame as a 4-bit symbol "1111 ", the USBFS symbol "SOP", which signals the start of a data packet by the reception of the leading USBFS-K serial bit is encoded as a 4-bit symbol "0xD", the USBFS symbol "J", which signals the reception of the second serial equal to an USBFS-J bit is encoded as a 4-bit symbol "0x0", the USBFS symbol "J", which signals the third received serial bit equal to an USBF-K is encoded as a 4-bit symbol "0x1", the input USBFS RX INPUT and the output USBFS TX terminations of the repeater are also shown, the SOP counter USBFS RX PERIOD, which measures the time from the NOP data slot in the frame and the start of data-K reception is also shown, and the propagation delay of the leading data edge through the repeater is also shown. Figs. 3A1-3A2 refer to the case where the first serial bit is received after 10 cycles are counted by the Rx Latency Counter since the last USBFS data slot in the channel's frame, thus implying that the it will be possible to transmit the first bit at the next USBFS data slot allocation on the repeater's channel that will happen in 73.33ns, as in this example embodiment the USBFS data slot is regularly allocated at every bit period of 83.33ns. Figs. 3A1-3A2 also show that that the delay of 10 nanosecond (ns) is captured on the Rx latency counter at the leading data edge and, at the next USBFS data slot coming in 73.33ns, the counter value is sent encoded across the repeater channel along with the SOP ID header equal to 0xD. Figs. 3A1-3A2 also show that the reception of the SOP symbol at the downstream end of the repeater triggers a Tx Transition Counter which is uploaded with the SOP counter value of 10ns and down counts the SOP counter value. Figs. 3A1-3A2 finally show that the end of the Tx Transition Counter triggers the retransmission of the first data bit and that an end-to-end propagation delay of 92ns is ideally achieved in this example. Figs. 3B1-3B2 refer to the case where the first serial bit is detected after 30 cycles are counted by the Rx Latency Counter since the last USBFS data slot in the channel's frame, and also show that following the same operations described for Figs. 3A1-3A2 the same end-to-end propagation delay of 92ns is ideally achieved in this case equal to the case of Figs. 3A1-3A2. Figs. 3C1-3C2 refer to the case where the first serial bit is received after 70 cycles are counted by the Rx Latency Counter since the last USBFS data slot in the channel's frame, and also show that following the same operations described for Figs. 3A1-3A2 the same end-to-end propagation delay of 92ns is ideally in this case equal to the case of Figs. 3A1-3A2 and Figs. 3B1-3B2. Figs. 3D1-3D2 refer to the case where the first serial bit is received after 95 cycles are counted by the Rx Latency Counter since the last USBFS data slot in the channel's frame, and also show that following the same operations described for Figs. 3A1-3A2 the same end-to-end propagation delay of 92ns is ideally achieved in this case as being equal to the cases of Figs. 3A1-3A2, Figs. 3B1-3B2, and Figs. 3C1-3C2.

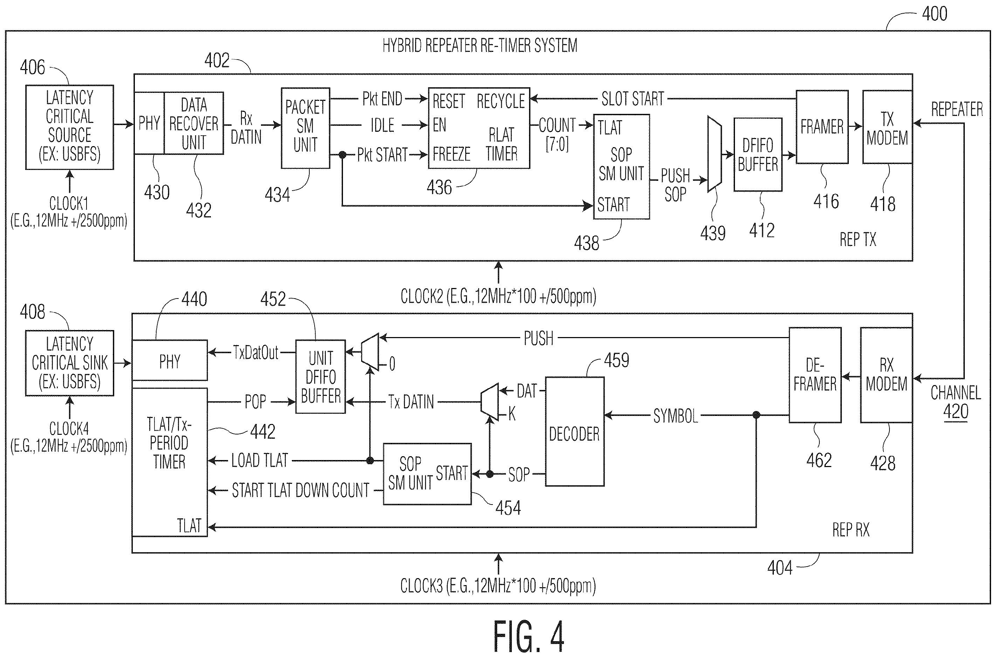

Fig. 4 depicts an embodiment of a hybrid repeater re-timer system 400 supporting downstream traffic repetition. The hybrid repeater re-timer system 400 depicted in Fig. 4 is an embodiment of the hybrid repeater re-timer system 100 depicted in Fig. 1. However, the hybrid repeater re-timer system 100 depicted in Fig. 1 is not limited to the embodiment depicted in Fig. 4. In some embodiments, symmetric embodiment is required to support repeater communication in the upstream direction.

In the embodiment depicted in Fig. 4, the hybrid repeater re-timer system 400 has a repeater channel 420 (e.g., a single serial link) between a data source (e.g., a latency critical data source) 406 and a data sink (e.g., a latency critical sink) 408. In some embodiments, the hybrid repeater re-timer system 400 has one repeater channel (e.g., the repeater channel 420) between multiple data sources and multiple critical sinks. In the embodiment depicted in Fig. 4, the hybrid repeater re-timer system 400 includes a transmitter (TX) 402 and a receiver (RX) 404. The hybrid repeater re-timer system 400 may be fully or partially implemented as at least one integrated circuit (IC) device. In some embodiments, the transmitter (TX) 402 and the receiver (RX) 404 are located in separate substrates and are implemented as separate IC devices.

In the embodiment depicted in Fig. 4, the transmitter (TX) 402 includes a PHY unit 430, a data recover unit 432, a packet state machine (SM) unit 434 (also referred to as a finite state machine (FSM) and can be implemented as a digital logic or a microcontroller), a receiver latency (RLAT) timer 436, a start of packet (SOP) SM unit 438, a multiplexer 439, a data First-in First-out (FIFO) buffer 412, a framer 416, and a TX modem 418. In some embodiments, at least one of the data recover unit 432, the packet SM unit 434, the RLAT timer 436, the start of packet (SOP) SM unit 438, the multiplexer 439, the data FIFO (DFIFO) buffer 412, the framer 416, and the TX modem 418 is implemented in digital and/or firmware circuity. In some embodiments, the PHY unit 430 is implemented in analog, digital, and/or firmware circuity. In some embodiments, the framer 416 is configured to generate frames based on the symbols, where the TX modem 418 is configured to transmit the frames over the repeater channel 420. In some embodiments, the transmitter (TX) 402 is a component of an embedded Universal Serial Bus (eUSB) repeater.

In an example operation of the transmitter (TX) 402, based on signals from the latency critical data source 406 (e.g., USBFS) received through the PHY unit 430, the data recover unit 432 generates a RX Datin signal, which are inputted into the packet SM unit 434. The latency critical data source 406 operates under a clock signal Clock1 and the transmitter (TX) 402 operates under a clock signal Clock2. Based on the RX Datin signal, the packet SM unit 434 generates a Pkt end signal, an IDLE signal, and a Pkt start signal, which are inputted into the RLAT timer 436. Based on a Slot start signal from the framer, the Pkt end signal, the IDLE signal, and the Pkt start signal from the packet SM unit 434, the RLAT timer 436 generates a Count signal, which is inputted into the SOP SM unit 438. Based on the Count signal and the Pkt start signal from the packet SM unit 434, the SOP SM unit 438 generates a Push Sop signal, which is inputted into the multiplexer 439. The data FIFO (DFIFO) buffer 412 stores inputs from the multiplexer 439 and outputs stored data to the framer 416, which generates data frames that are modulated by the TX modem 418 and transmitted to the RX 404 through the repeater channel 420.

In accordance with an embodiment of the invention, the RLAT timer 436 is configured to generate a counter value that represents a time distance between a frame slot and a packet start and the TX modem 418 is configured to transmit output data containing the counter value over a repeater channel. In some embodiments, a time calculated from the counter value is elapsed at the RX 404 to achieve a deterministic and fixed propagation delay before starting data retransmission, e.g., from the latency critical data sink 408. In some embodiments, the RLAT timer 436 is further configured to measure a time duration from when the packet start is detected to when the frame slot is transmitted on the repeater channel 420. In some embodiments, the framer 416 is configured to generate frames based on the counter value, where the TX modem 418 is further configured to transmit the frames over the repeater channel. In some embodiments, the packet SM unit 434 is configured to start a counter of the RLAT timer 436 when a start-of-packet is detected, and the counter value of the counter represents the time distance between the frame slot of the repeater channel and the packet start. In some embodiments, the RLAT timer 436 is further configured to recycle the counter each time a slot start signal is received. In some embodiments, the RLAT timer 436 is further configured to freeze the counter value when the packet start is detected by the packet SM unit 434. In some embodiments, the packet SM unit 434 is further configured to trigger the SoP SM unit 438 when the packet start is detected. In some embodiments, the SoP SM unit 438 is configured to generate an SOP extended symbol that includes an SOP identification (ID) and the counter value. In some embodiments, the physical layer 430 is configured to receive input data from the data source 406 with a latency requirement. In some embodiments, the counter value represents the time distance between the frame slot of the repeater channel and the packet start of the input data. In some embodiments, the TX 402 is a component of an embedded Universal Serial Bus (eUSB) repeater.

In the embodiment depicted in Fig. 4, the receiver (RX) 404 includes a Transmit Latency (TLAT)/TX-period timer 442, a PHY unit 440, a multiplexer 450, a data FIFO buffer 452, an SOM SM unit 454 (e.g., a digital logic or a microcontroller), a multiplexer 456, a decoder 459, a de-framer 462, and a RX modem 428. In some embodiments, at least one of the TLAT/TX-period timer 442, the multiplexer 450, the data FIFO buffer 452, the SOM SM unit 454, the multiplexer 456, the decoder 459, the de-framer 462, and the RX modem 428 is implemented in analog, digital, and/or firmware circuity. In some embodiments, the PHY unit 440 is implemented in analog, digital, and/or firmware circuity. In some embodiments, the RX modem 428 is configured to demodulate signals received over the repeater channel 420, the de-framer 462 is configured to generate symbols based on demodulated signals from the RX modem 428, and the decoder 459 is configured to decode the symbols. In some embodiments, the receiver (RX) 404 is a component of an embedded Universal Serial Bus (eUSB) repeater.

In an example operation of the receiver (RX) 404, the RX modem 428 processes (e.g., demodulates) signals received from the TX modem 418 through the repeater channel 420 and outputs processed (e.g., demodulated) signals to the de-framer 462, which generates symbols and a Push signal. The decoder 459 decodes the symbols to generate a data signal Dat, which is inputted into the multiplexer 456, and an SOP signal, which is inputted into the SOP SM unit 454. The SOP SM unit 454 generates a Load TLAT signal and a Start TLAT Down Count signal based on the SOP signal. Controlled by the SOP signal, the multiplexer 456 generates a TX Datin signal based on the data signal Dat. Controlled by the Load TLAT signal, the multiplexer 450 generates a signal based on the Push signal. Based on the TX Datin signal, the output signal from the multiplexer 450, and a Pop signal from the TLAT/TX-period timer 442, the data FIFO (DFIFO) buffer 258 generates a TX DATOUT signal. The TLAT/TX-period timer 442 generates at least the Pop signal based on the Load TLAT signal, the Start TLAR Down Count signal, and the symbols from the de-framer 462. The TLAT/TX-period timer 442 and the data FIFO buffer 452 transmit signals to the latency critical sink 408 (e.g., USBFS) through the PHY unit 440. The latency critical sink 408 operates under a clock signal Clock4 and the receiver (RX) 404 operates under a clock signal Clock3.

In an example operation of the hybrid repeater re-timer system 400, when the Packet SM unit 434 in the TX 402 detects that the bus is IDLE (e.g., because of detecting start-of-packet signaling), the Packet SM unit 434 starts a RLAT up-counter of the RLAT timer 436, which continuously recycles each time the Slot start signal received from the framer 416. The "Slot start" signal indicates when the Slot becomes present on the repeater channel 420. When a Packet start is detected by the Packet SM unit 434 (e.g., because of detecting the leading edge of a SYNC pattern), the current RLAT counting value (TLAT) is frozen and represents the time distance between the last frame slot and the packet start. The packet-start event also triggers the SOP SM unit 438, which pushes the SOP extended symbol, which is composed by the SOP ID followed by TLAT, into the Data FIFO buffer 412. The framer 416 and the TX modem 418 process and transport the SOP symbol over the repeater channel 420 as soon as possible (e.g., at the first slot opportunity). The greater the TLAT value, the lower the time to wait before the SOP symbol is transported and vice versa. When received by the RX 404, the SOP packet is decoded by the decoder 459. When the SOP ID is decoded, the first packet symbol, which has known characteristics of the protocol ("K" signal in the USBFS case), is pushed in the DFIFO buffer 452, waiting to be transmitted. The decoded SOP ID also starts the SOP SM unit 454, which first loads the TLAT data received from the framer to the TLAT/TX-period timer 442, gating the DFIFO buffer 452 such that TLAT is not also pushed for line transmission, and then triggers the TLAT count-down. When the TLAT/TX-period timer 442 finishes counting TLAT, the TLAT/TX-period timer 442 enables line transmission and starts periodic fetch of data from the DFIFO buffer 452, starting from the K data previously stored by the SOP ID.

In some embodiments, the receiver (RX) 404 also includes the PHY unit 430, the data recover unit 432, the packet SM unit 434, the RLAT timer 436, the start of packet (SOP) SM unit 438, the multiplexer 439, the data FIFO (DFIFO) buffer 412, the framer 416, and the TX modem 418, while the transmitter (TX) 402 also includes the TLAT/TX-period timer 442, the PHY unit 440, the multiplexer 450, the data FIFO buffer 452, the SOM SM unit 454, the multiplexer 456, the decoder 459, the de-framer 462, and the RX modem 428.

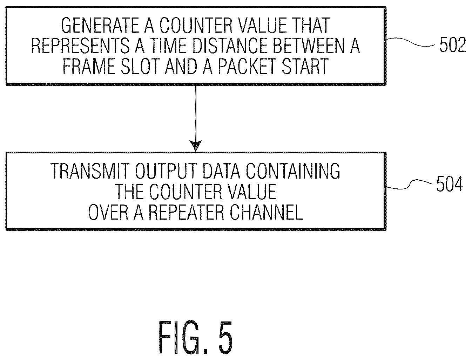

Fig. 5 is a process flow diagram of a method of operating a repeater in accordance with an embodiment of the invention. At block 502, a combined frequency correction is applied based on a first frequency correction received over a repeater channel and a second frequency correction that is locally generated at the repeater. At block 504, an input data stream received over the repeater channel is regenerated based on the combined frequency correction. In some embodiments, symbols contained in the input data stream are decoded to generate the first frequency correction. In some embodiments, the second frequency correction is generated based on the symbols. The repeater may be the same as or similar to the receiver (RX) 104 depicted in Fig. 1, the hybrid repeater re-timer system 100 depicted in Fig. 1, the receiver (RX) 204 depicted in Fig. 2, and/or the hybrid repeater re-timer system 200 depicted in Fig. 2.

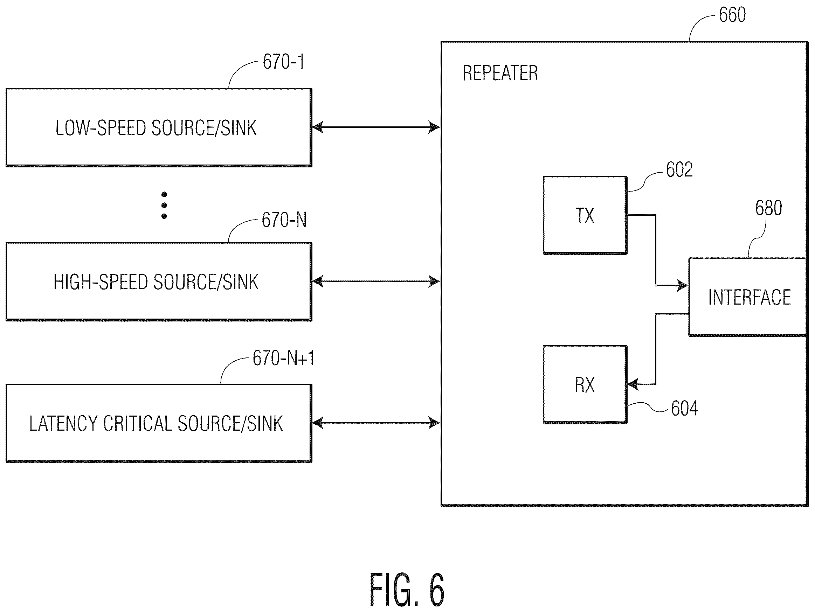

Fig. 6 depicts an example of a repeater 660 in accordance with an embodiment of the invention. In the embodiment depicted in Fig. 6, the repeater 660 includes a transmitter (TX) 602, a receiver (RX) 604, and an interface 680, is connected to one or more data sources and/or sinks 670-1, ..., 670-N+1, where N is a positive integer, through one or more links (e.g., a serial communications interface, such as, an USB interface (e.g., an eUSB interface)). For example, the TX 602 depicted in Fig. 6 may be an embodiment of the TX 102 depicted in Fig. 1 and/or the TX 202 depicted in Fig. 2. In an example, the RX 604 depicted in Fig. 6 may be an embodiment of the RX 104 depicted in Fig. 1 and/or the RX 204 depicted in Fig. 2. In some embodiments, the data sources and/or sinks 670-1, ..., 670-N+1 include a low-speed data source/sink (e.g., Serial Peripheral Interface (SPI)) 670-1, a high-speed data source/sink (e.g., USB High Speed (USBHS)) 670-N, and a latency critical data source/sink (e.g., USB Full Speed (USBFS)) 670-N+1. The repeater 660 may be fully or partially implemented as an integrated circuit (IC) device. In the embodiment depicted in Fig. 6, the transmitter (TX) 602 and the receiver (RX) 604 are located in the same substrate and the repeater 660 is implemented as one IC device (e.g., a system on chip (SOC)) for bi-directional (downstream and upstream) communications. Although the depicted repeater 660 is shown in Fig. 6 with certain components and described with certain functionality herein, other embodiments of the repeater 660 may include fewer or more components to implement the same, less, or more functionality. In addition, although the repeater 660 is shown in Fig. 6 as being connected in a certain topology, the network topology of the repeater 660 is not limited to the topology shown in Fig. 6.

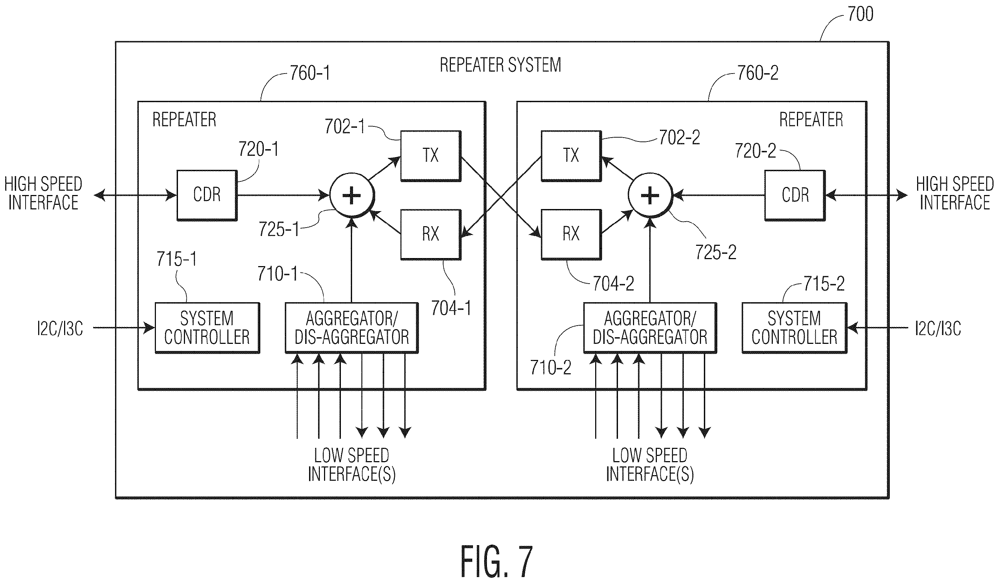

Fig. 7 depicts an example of a repeater system 700 in accordance with an embodiment of the invention. In the embodiment depicted in Fig. 7, the repeater system 700 includes a first repeater 760-1 that includes a transmitter (TX) 702-1, a receiver (RX) 704-1, an aggregator/dis-aggregator 710-1 that may be connected to one or more low speed interfaces (e.g., Universal Asynchronous Receiver/Transmitter (UART), Serial Wire Debug (SWD), or I2C), a system controller 715-1 that may be connected to I2C/I3C interface, a Clock Data Recovery (CDR) 720-1 that may be connected to a high speed interface, and a switch/multiplexer 725-1 and a second repeater 760-2 that includes a transmitter (TX) 702-2, a receiver (RX) 704-2, an aggregator/dis-aggregator 710-2 that may be connected to one or more low speed interfaces (e.g., Universal Asynchronous Receiver/Transmitter (UART), Serial Wire Debug (SWD), or I2C), a system controller 715-2 that may be connected to I2C/I3C interface, a Clock Data Recovery (CDR) 720-2 that may be connected to a high speed interface, and a switch/multiplexer 725-2. In the embodiment depicted in Fig. 7, the repeater system 700 is half-duplex, the TX 702-1 communicates with the RX 704-2 and the TX 702-2 communicates with the RX 704-1 over a serial channel (e.g., tying all four of the ports (2 TX and 2 RX) together) to implement both downstream and upstream traffic. The repeater system 700 may be an embodiment of the hybrid repeater re-timer system 100 depicted in Fig. 1 and/or the hybrid repeater re-timer system 200 depicted in Fig. 2. For example, the TXs 702-1, 702-2 depicted in Fig. 7 may be an embodiment of the TX 102 depicted in Fig. 1 and/or the TX 202 depicted in Fig. 2. In an example, the RXs 704-1, 704-2 depicted in Fig. 7 may be an embodiment of the RX 104 depicted in Fig. 1 and/or the RX 204 depicted in Fig. 2. Each of the first repeater 760-1 and the second repeater 760-2 may be fully or partially implemented as an integrated circuit (IC) device. For example, the transmitter (TX) 702-1 and the receiver (RX) 704-1 are located in the same substrate and the repeater 760-1 is implemented as one IC device (e.g., a system on chip (SOC)) for bi-directional communications. In another example, the transmitter (TX) 702-2 and the receiver (RX) 704-2 are located in the same substrate and the repeater 760-2 is implemented as one IC device (e.g., a system on chip (SOC)) for bi-directional communications. Although the depicted repeater system 700 is shown in Fig. 7 with certain components and described with certain functionality herein, other embodiments of the repeater system 700 may include fewer or more components to implement the same, less, or more functionality. In addition, although the repeater system 700 is shown in Fig. 7 as being connected in a certain topology, the network topology of the repeater system 700 is not limited to the topology shown in Fig. 7. The repeater system 700 may be a wired communications system or a wireless communications system.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner. Although some examples described above may refer to USB protocols, however, the invention can be generalized to other protocols.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A repeater comprising:
a timer configured to generate a counter value that represents a time distance between a frame slot and a packet start; and
a modem configured to transmit output data containing the counter value over a repeater channel.

2. The repeater of claim 1, wherein a time calculated from the counter value is elapsed at a receiver to achieve a deterministic and fixed propagation delay before starting data retransmission.

3. The repeater of claim 1 or 2, wherein the timer is further configured to measure a time duration from when the packet start is detected to when the frame slot is transmitted on the repeater channel.

4. The repeater of any of the claims 1 to 3, further comprising a packet management unit configured to start a counter of the timer when a start-of-packet is detected, and wherein the counter value of the counter represents the time distance between the frame slot of the repeater channel and the packet start.

5. The repeater of claim 4, wherein the timer is further configured to recycle the counter each time a slot start signal is received.

6. The repeater of claim 4 or 5, wherein the timer is further configured to freeze the counter value when the packet start is detected by the packet management unit.

7. The repeater of any of claims 4 to 6, wherein the packet management unit is further configured to trigger a start of packet (SoP) unit when the packet start is detected.

8. The repeater of claim 7, wherein the SoP unit is configured to generate an SOP extended symbol that comprises an SOP identification (ID) and the counter value.

9. The repeater of any of claims 1 to 8, further comprising a physical layer configured to receive input data from a data source with a latency requirement, and wherein the counter value represents the time distance between the frame slot of the repeater channel and the packet start of the input data.

10. The repeater of any of claims 1 to 9, wherein the repeater comprises an embedded Universal Serial Bus (eUSB) repeater.

11. The repeater of claim 10, wherein the eUSB repeater comprising:
the timer configured to generate the counter value that represents the time distance between the frame slot and the packet start;
a framer configured to generate a plurality of frames based on the counter value; and
a modem configured to transmit the frames over a repeater channel.

12. The repeater of claim 11, the eUSB repeater further comprising the packet management unit configured to start the counter of the timer when the start-of-packet is detected.

13. A method of operating a repeater, the method comprising:
generating a counter value that represents a time distance between a frame slot and a packet start; and
transmitting output data containing the counter value over a repeater channel.

14. The method of claim 13, further comprising generating a plurality of frames based on the counter value, wherein transmitting the output data containing the counter value over the repeater channel comprises transmitting the frames over the repeater channel.

15. The method of claim 13 or 14, further comprising starting a counter when a start-of-packet is detected, and wherein the counter value of the counter represents the time distance between the frame slot of the repeater channel and the packet start.
